# EUROPEAN PATENT APPLICATION

(11) **EP 3 967 519 A1**
(43) Date of publication of application: **16.03.2022**
(21) Application number: 21195003.5
(22) Date of filing: 06.09.2021
(51) Int. Cl.: B60C 11/00, B60C 17/00

(54) **RUN-FLAT TIRE**

(30) Priority: 09.09.2020 JP 2020151305
(71) Applicant: Toyo Tire Corporation, Itami-shi, Hyogo 664-0847 (JP)
(72) Inventor: SHIBAYAMA, Kensuke, Hyogo, 664-0847 (JP)
(74) Representative: Müller-Boré & Partner Patentanwälte PartG mbB

(57) **Abstract**

A run-flat tire is provided which can improve durability by suppressing tire wear during run-flat travel of travelling with zero internal pressure. Provided are a pair of beads (11), a pair of sidewalls (12) extending from each of the beads (11) to the outer side in the tire width direction, tread (13) arranged between the sidewalls (12), and a carcass ply (23) bridged between the beads (11), in which the sidewall (12) has sidewall rubber (40) and a reinforcement rubber layer (41), the tread (13) has tread rubber (50) including cap rubber (51) and high modulus rubber (52) arranged on the tire width-direction outer side of the cap rubber (51) and having higher modulus than the cap rubber (51), and a tire-radial direction inside end (52c) of the high modulus rubber (52) is positioned more to a tire-radial inner side than a tire-radial direction outside end (41a) of the reinforcement rubber layer (41), while normal internal pressure.

## Description

### BACKGROUND OF THE INVENTION

### Field of the Invention

The present invention relates to a side-reinforced type of run-flat tire in which a reinforced rubber layer is arranged at the sidewall.

### Related Art

Conventionally, a side-reinforced type run-flat tire made by arranging a reinforced rubber layer at the sidewall has been known. This reinforced rubber layer has a function of hindering the tire from completely flattening, even if the internal pressure of the tire declines. Consequently, a run-flat tire is able to perform run-flat travel (travel in a state with the internal pressure of the tire declined) of a certain distance, by including this reinforced rubber layer. For example, Patent Document 1 discloses a run-flat tire including the above such reinforcement rubber layer, the run-flat tire achieving suppression of tread lift occurring during run-flat travel, by laminating a band layer made by spirally winding band cords, and a tread reinforcement layer made using a high hardness and low heat generation rubber, on an outer side of a carcass inside of a tread part.

Patent Document 1: Japanese Patent No. 4456338

### SUMMARY OF THE INVENTION

During run-flat travel, there are cases where a transition region (shoulder part) from the tread to the sidewall which does not make ground contact with the road surface during normal internal pressure does make ground contact. In the tire disclosed in Patent Document 1, since the transition part thereof transitions from the rubber layer of the tread to the rubber layer of the sidewall, there is a possibility of the sidewall making ground contact. The rubber layer of the sidewall has low comparative hardness due to maintaining ride quality. For this reason, due to being inferior in wear resistance, wearing occurs at an early stage, and there is a possibility of not being able to sufficiently secure durability in this point.

The present invention has been made taking account of the above problem, and an object thereof is to provide a run-flat tire which can improve the durability by suppressing tire wear during run-flat travel of traveling with zero internal pressure.

A run-flat tire according to a first aspect of the present invention (for example, the tire 1) is a run-flat tire capable of run-flat tire while zero internal pressure, including: a pair of beads (for example, the beads 11); a pair of sidewalls (for example, the sidewalls 12) which extend from each of the pair of beads to an outer side in the tire-radial direction; a tread (for example, the tread 13) disposed between the pair of sidewalls; and a carcass ply (for example, the carcass ply 23) bridged between the pair of beads, in which the sidewall has sidewall rubber (for example, the sidewall rubber 40) disposed on a tire-width direction outer side of the carcass ply, and a reinforcement rubber layer (for example, the reinforcement rubber layer 41) disposed on a tire inner cavity side of the carcass ply, the tread has tread rubber (for example, the tread rubber 50) including cap rubber (for example, the cap rubber 51) disposed on a tire-radial direction outer side of the carcass ply, and high modulus rubber (for example, the high modulus rubber 52) disposed on a tire-width direction outer side of the cap rubber, and having a higher modulus than the cap rubber, and a tire-radial direction inside end (for example, the tire radial-direction inside end 52c) of the high modulus rubber is positioned more to a tire-radial inner side than a tire-radial direction outside end (for example, the tire radial-direction outside end 41a) of the reinforcement rubber layer, while normal internal pressure.

According to a second aspect of the present invention, in the run-flat tire as described in the first aspect, the sidewall rubber extends until a tire-width direction outer side region of the tread, and the sidewall rubber is laminated on a tire-width direction outer side of the high modulus rubber in a tire-width direction outer side region of the tread.

According to a third aspect of the present invention, in the run-flat tire as described in the second aspect, the high modulus rubber is disposed to contact with a tire-width direction inner side of the sidewall rubber.

According to a fourth aspect of the present invention, in the run-flat tire as described in the first aspect, the tread rubber extends until a tire-radial direction outer side region of the sidewall rubber, and the high modulus rubber is laminated on a tire-width direction outer side of the sidewall rubber in a tire-radial direction outer side region of the sidewall.

According to a fifth aspect of the present invention, in the run-flat tire as described in the fourth aspect, the high modulus rubber is disposed to contact at a tire-width direction outer side of the sidewall rubber. According to a sixth aspect of the present invention, in the run-flat tire as described in any one of the first to fifth aspects, the tire-radial direction inside end of the high modulus rubber is positioned more to a tire-radial direction inner side than a tire-radial direction outside end (for example, the tire radial-direction outside end 40a) of the sidewall rubber, while normal internal pressure.

According to a seventh aspect of the present invention, in the run-flat tire as described in any one of the first to sixth aspects, the high modulus rubber does not make contact with a road surface while normal internal pressure, and contacts with a road surface while zero internal pressure.

According to an eighth aspect of the present invention, in the run-flat tire as described in any one of the first to seventh aspects, the high modulus rubber has a ground contact part (for example, the ground contact part 52e) which contacts with a road surface while zero internal pressure, and a thickness of the ground contact part includes a portion of at least 1 mm.

According to a ninth aspect of the present invention, in the run-flat tire as described in any one of the first to eighth aspects, a position of a tire-width direction inside end (for example, the tire width-direction inside end 52d) of the high modulus rubber is positioned more to a tire-width direction outer side than a position of the tire-radial direction outside end of the reinforcement rubber layer.

According to the present invention, it is possible to provide a run-flat tire which can improve the durability by suppressing tire wear during run-flat travel of traveling with zero internal pressure.

### BRIEF DESCRIPTION OF THE DRAWINGS

FIG. 1 is a view showing a half section in a tire-width direction while normal internal pressure of a run-flat tire according to a first aspect of the present invention;
FIG. 2 is a partial enlarged cross-sectional view of FIG. 1;
FIG. 3 is a view showing a partial cross section in the tire-width direction in a ground contact state while zero internal pressure of the run-flat tire according to the first embodiment;
FIG. 4 is a view showing a half section in the tire-width direction while normal internal pressure of a run-flat tire according to a second embodiment of the present invention;
FIG. 5 is a partial enlarged cross-sectional view of FIG. 4; and
FIG. 6 is a view showing a partial cross section in the tire-width direction in a ground contact state while zero internal pressure of the run-flat tire according to the second embodiment.

### DETAILED DESCRIPTION OF THE INVENTION

Hereinafter, embodiments of the present invention will be explained while referencing the drawings.

### (First Embodiment)

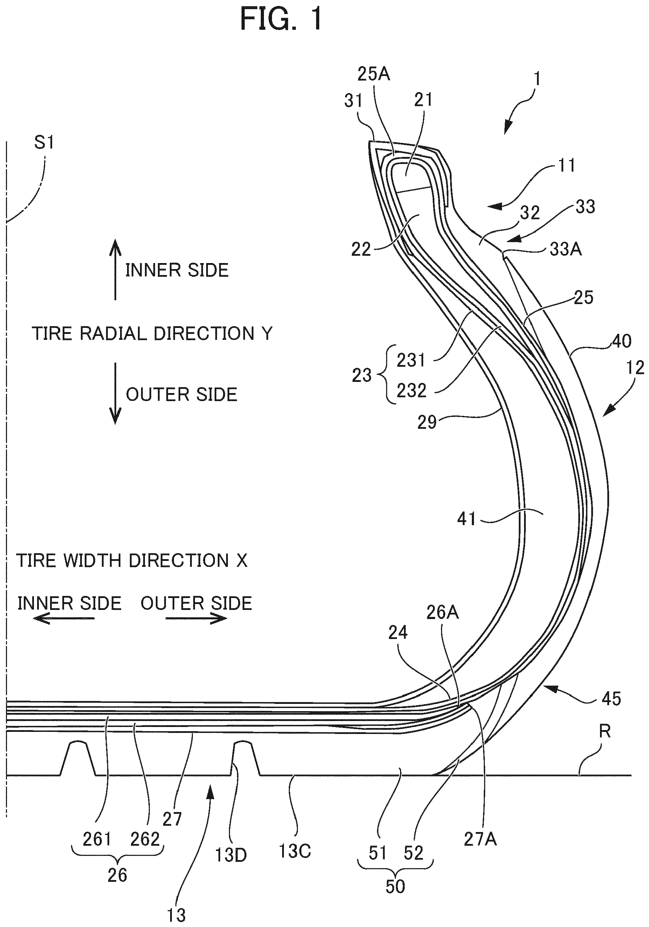

FIG. 1 is a view showing a half section in a tire-width direction of a tire 1, which is a run-flat tire according to a first aspect of the present invention. Since the structure of the tire 1 is left-right symmetrical in a cross section in the tire-width direction, a cross section of the right half is shown herein. In the drawings, reference number S1 is a tire equatorial plane. The tire equatorial plane S1 is a plane intersecting a tire rotational axis (tire meridian axis), and is positioned at the center in the tire-width direction.

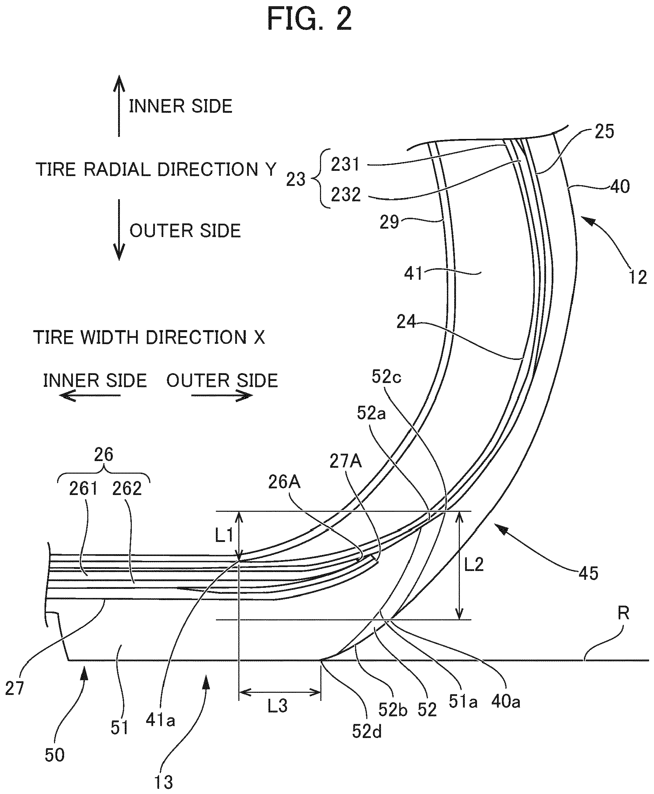

Herein, tire-width direction is a direction parallel to the tire rotational axis, and is the left-right direction in the paper plane of the cross-sectional view of FIG. 1. In FIG. 1, it is illustrated as the tire-width direction X. Then, tire-width direction inner side is a direction near the tire equatorial plane S1, and is the left side in the paper plane of FIG. 1. Tire width-direction outer side is a direction distanced from the tire equatorial plane S1, and is the right side in the paper plane of FIG. 1. In addition, tire-radial direction is a direction perpendicular to the tire rotational axis, and is the vertical direction in FIG. 1. In FIG. 1, it is illustrated as the tire-radial direction Y. Then, a tire-radial direction outer side is a direction distanced from the tire rotational axis, and is a lower side in the paper plane of FIG. 1. Tire-radial direction inner side is a direction approaching the tire rotational axis, and is an upper side in the paper plane of FIG. 1. It should be noted that the cross-sectional view of FIG. 1 is a tire-width direction cross-sectional view (tire meridian axis cross-sectional view) in a state mounting the tire 1 to a standard rim which is not shown, and making ground contact with the road surface R during normal internal pressure filling the standard internal pressure. It should be noted that standard rim indicates a rim serving as a standard decided by JATMA to correspond to the tire size. In addition, standard internal pressure is 180 kPa in the case of the tire being for a passenger vehicle, for example. It should be noted that the same also applies for FIGS. 2, 4 and 5 described later.

The tire 1 is a run-flat tire for a passenger vehicle, for example. As shown in FIG. 1, the tire 1 includes a pair of beads 11 provided on both sides in the tire-width direction, a pair of sidewalls 12 extending from each of the pair of beads 11 to the outer side in the tire-radial direction, and a tread 13 arranged between the pair of sidewalls 12.

The bead 11 includes a bead core 21, and bead filler 22 extending to the outer side in the tire-radial direction of the bead core 21. The bead core 21 is an annular member formed by wrapping around several times bead wires made of metal coated with rubber. The bead core 21 is a member which plays a role of fixing the tire 1 filled with air to the rim of a wheel which is not illustrated. The bead filler 22 is a rubber member of tapered tip shape, extending to the outer side in the tire-radial direction of the bead core 21. The bead filler 22 is a member provided in order to raise the rigidity of the bead peripheral part and to ensure high maneuverability and stability. The bead filler 22 is configured by rubber of higher hardness than the rubber member of the surroundings, for example.

A carcass ply 23 bridging between the pair of beads 11 is embedded inside of the tire 1. The carcass ply 23 configures a ply serving as the backbone of the tire 1, and is embedded within the tire 1, in a form passing through the pair of sidewalls 12 and the tread 13 between the pair of beads 11.

The carcass ply 23 extends from one bead core 21 to another bead core 21, and includes a ply body 24 extending between the tread 13 and bead 11, and a ply folding part 25 which is folded through an elbow-shaped bend 25A around the bead core 21. In the present embodiment, the ply folding part 25 is overlapped with the ply body 24. The elbow-shaped bend 25A configures a portion the most inwards in the tire-radial direction of the carcass ply 23.

The carcass ply 23 is configured by a plurality of ply cords extending in the tire-width direction. The plurality of ply cords is arranged to align in the tire circumferential direction. This ply cord is configured by a steel cord made of metal, or an insulative organic fiber cord such as polyester or polyamide, and is coated by a topping rubber. It should be noted that the carcass ply 23 of the present embodiment is configured by two layers of carcass ply in which a first carcass ply 231 and second carcass ply 232 are stacked; however, the carcass ply 23 may be one layer, or may be three or more layers.

As in the present embodiment, it is preferable for the carcass ply 23 configured by at least two or more layers of ply to be held between the bead filler 22 and reinforcement rubber layer 41 described later. It is thereby possible to more effectively suppress localized deformation from occurring in the vicinity of the rim mounting part, and further improve the run-flat durability.

The bead 11 further includes a chamfer 31, and rim strip rubber 32 arranged at the tire-width direction outer side of the chamfer 31.

The chamfer 31 is provided so as to surround an end on the tire-radial direction inner side of the carcass ply 23 including the elbow-shaped bend 25A. In other words, at an end on the tire-radial direction inner side of the tire 1, the chamfer 31 covers an outer surface on the tire-radial direction inner side of the elbow-shaped bend 25A from an outer surface on the tire-width direction inner side of the carcass ply 23, and further covers an outer surface on the tire-width direction outer side of the ply folding part 25 of the carcass ply 23.

The rim strip rubber 32 is arranged on the tire-width direction outer side of the chamfer 31 and the ply folding part 25 of carcass ply 23. When rim mounted, the rim strip rubber 32 is a member which makes contact with this rim. A portion covering part of the ply folding part 25 of the rim strip rubber 32 becomes a tapered shape as approaching the outer side in the tire-radial direction, and the tip portion thereof is covered by a sidewall rubber 40 described later.

The sidewall 12 includes the sidewall rubber 40 arranged at the outer side in the tire-width direction of the carcass ply 23, and the reinforcement rubber layer 41 arranged at the inner side in the tire-width direction of the carcass ply 23.

The sidewall rubber 40 is a rubber member constituting the outer wall surface of the tire 1. This sidewall rubber 40 is a portion which is the most warped upon the tire 1 making a cushioning action, and flexible rubber having fatigue resistance is normally adopted therein.

The reinforcement rubber layer 41 is a substantially crescent-moon shaped side reinforcement rubber in a tire-width direction cross-sectional view (tire meridian axis cross-sectional view). This reinforcement rubber layer 41 has a function of hindering the tire 1 from completely flattening even in a case of the internal pressure of the tire 1 declining. The reinforcement rubber layer 41 is a shape such that either the end on the outer side and the end on the inner side in the tire-radial direction thereof tapers as approaching the tip. The end on the outer side in the tire-radial direction of the reinforcement rubber layer 41 extends until a region of the tread 13. On the other hand, the end on the inner side in the tire-radial direction of the reinforcement rubber layer 41 extends until a region of the bead 11.

The tread 13 includes: a steel belt 26 arranged on the outer side in the tire-radial direction of a crown part of the carcass ply 23; a cap ply 27 arranged on the outer side in the tire-radial direction of the steel belt 26; and tread rubber 50 arranged at the outer side in the tire-radial direction of the cap ply 27.

The steel belt 26 is configured by a plurality of steel cords covered with rubber. By providing the steel belt 26, the rigidity of the tire 1 is ensured, and the ground contact state between the tread 13 and road surface R becomes better. In the present embodiment, a two-layer structure steel belt (inner-side steel belt 261 and outer-side steel belt 262) is provided; however, the number of laminated steel belts 26 is not limited thereto.

The cap ply 27 is a member arranged on the outer side in the tire-radial direction of the steel belt 26, and has a function as a belt reinforcement layer. The cap ply 27 is configured by an insulative organic fiber layer such as polyamide fibers, and is covered by topping rubber. By providing the cap ply 27, it is possible to achieve an improvement in durability and a reduction in road noise during travel. In the present embodiment, a tire-width direction outside end 27A of the cap ply 27 extends more to the outer side in the tire-width direction than a tire-width direction outside end 26A of the steel belt 26.

The tread rubber 50 includes cap rubber 51 arranged at the outer side in the tire-radial direction of the cap ply 27, and high modulus rubber 52 arranged at the outer side in the tire-width direction of the cap rubber 51. The cap rubber 51 is a rubber member constituting a main body of the tread 13, and has a tire tread (contact patch with road surface R) 13C. A tread pattern 13D configured by a plurality of grooves is provided to the tire tread 13C of the cap rubber 51. The high modulus rubber 52 is an annular rubber member of relatively thin thickness, and is configured by rubber of higher modulus than the cap rubber 51. The modulus representing the elastic modulus (tensile stress) of rubber is described later.

As shown in FIG. 1, in the bead 11, sidewall 12 and tread 13, an inner liner 29 as a rubber layer constituting an inside wall surface of the tire 1 is provided on the tire inner cavity side of the carcass ply 23 and the reinforcement rubber layer 41. The inner liner 29 mainly covers the inside surface of the carcass ply 23 in the tread 13, and mainly covers the inside surface of the reinforcement rubber layer 41 and chamfer 31 in the sidewall 12 and bead 11. The inner liner 29 is configured by air permeation resistant rubber, whereby the air inside the tire inner cavity is prevented from leaking to outside.

As shown in FIG. 1, in a transition region vicinity from the bead 11 to the sidewall 12, the ride strip rubber 32 and sidewall rubber 40 enter a state laminated in order on a tire outer surface side of the carcass ply 23. In addition, a rim protector 33 which has an apex part 33A projecting to the outer side in the tire-width direction and continuously extends in a ring shape in the tire circumferential direction is provided in this transition region vicinity. In the present embodiment, the apex part 33A of the rim protector 33 is provided to the rim strip rubber 32. The rim protector 33 has a function of protecting the rim from external injury.

In addition, in the bead 11, on the tire inner cavity side of the carcass ply 23, the reinforcement rubber layer 41 and chamfer 31 are laminated, and the inner liner 29 is laminated on the inner surface of the reinforcement rubber layer 41 and chamfer 31.

As shown in FIG. 2, in the tire 1 of the present embodiment, the sidewall rubber 40 of the sidewall 12 extends until a region of the outer side in the tire-width direction of the tread 13 and until a region on the outer side in the tire-radial direction. In the present embodiment, a tire-width direction end part of the tread rubber 50 is laminated on the tire outer surface side of the carcass ply 23 in the shoulder part 45, which is a transition region from the sidewall 12 to the tread 13.

In more detail, the end on the tire-width direction outer side of the cap rubber 51 serving as a main body of the tread rubber 50 extends more to the outer side in the tire-width direction and the tire-radial direction inner side than the tire-width direction outside end 27A of the cap ply 27, and is laminated to contact a part of the outer surface of the carcass ply 23. The high modulus rubber 52 is provided to cover the end face 51a on the tire-width direction outer side of the cap rubber 51. The end face 51a thereof is formed in a curved surface roughly along the sidewall 12, and the high modulus rubber 52 curves along this end face 51a.

The end part 52a on the tire-radial direction inner side of the high modulus rubber 52 is laminated to contact part of the carcass ply 23. In addition, the end part 52b on the tire-radial direction outer side of the high modulus rubber 52 is exposed, and configures a part of the tire outer surface. Then, the end part on the tire-radial direction outer side of the sidewall rubber 40 becomes a tapered shape, and the outer surface of the high modulus rubber 52 is arranged to contact at the tire-width direction outer side of the leading end part thereof. In other words, in the shoulder part 45 of the tire 1, the high modulus rubber 52 of the tread rubber 50 is sandwiched between the cap rubber 51 of the tread rubber 50 and the sidewall rubber 40, and the sidewall rubber 40 is laminated on the tire-width direction outer side of the high modulus rubber 52. The high modulus rubber 52 extends from the end part 52a on the tire-radial direction inner side contacting with the carcass ply 23 so as to curve towards the tire-width direction inner side, and the end part 52b on the tire-radial direction outer side thereof is exposed so as to configure the tire outer surface.

As shown in FIG. 2, the tire-radial direction inside end 52c of the high modulus rubber 52 is positioned more to the tire-radial direction inner side by a distance L1 than the tire-radial direction outside end 41a of the reinforcement rubber layer 41, while the tire 1 is normal internal pressure. In other words, in the tire-width direction view, the high modulus rubber 52 and reinforcement rubber layer 41 have a portion overlapping with each other. In addition, while the tire 1 is normal internal pressure, the tire-radial direction inside end 52c of the high modulus rubber 52 is positioned more to the tire-radial direction inner side by the distance L2 than the tire-radial direction outside end 40a of the sidewall rubber 40. In other words, in the tire-width direction view, the high modulus rubber 52 and sidewall rubber 40 have a portion overlapping with each other. Furthermore, while the tire 1 is normal internal pressure, the position of the tire-width direction inside end 52d of the high modulus rubber 52 is positioned more to the tire-width direction outer side by a distance L3 than the position of the tire-radial direction outside end 41a of the reinforcement rubber layer 41. the high modulus rubber 52 and the reinforcement rubber layer 41 have a portion overlapping with each other in the tire-radial direction view.

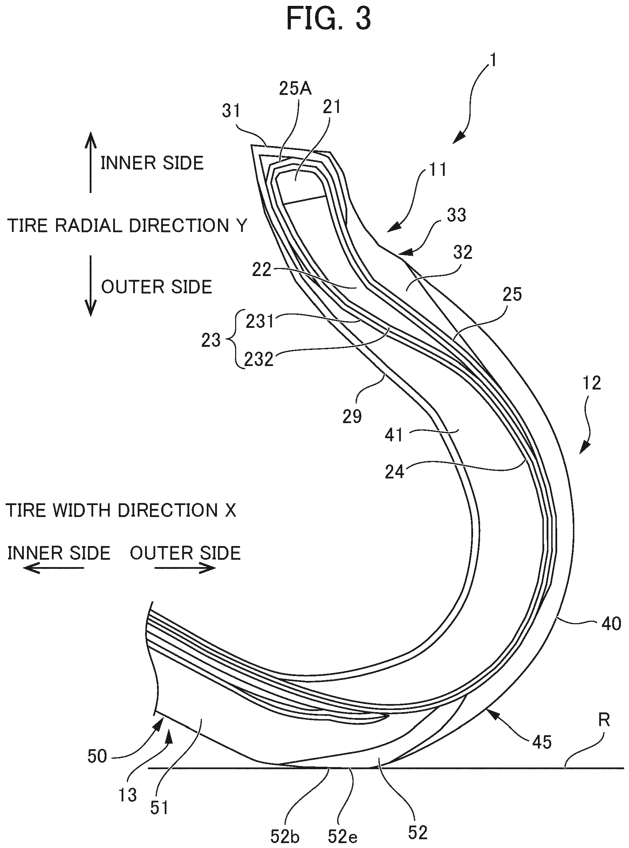

FIG. 3 shows a width-direction cross section of the tire 1 while zero internal pressure where the internal pressure becomes zero. During run-flat travel of travelling in the zero internal pressure state, the tire 1 deforms as in FIG. 3. Herein, during zero internal pressure indicates a state in which the internal pressure of the tire is zero, and applying a load of 65% of the weight corresponding to the road index. The high modulus rubber 52 of the present embodiment does not contact the road surface R during normal internal pressure, as shown in FIGS. 1 and 2. On the other hand, as shown in FIG. 3, the high modulus rubber 52 has the ground contact part 52e which contacts the road surface R. The end part 52b on the tire-radial direction outer side of the aforementioned high modulus rubber 52 includes the ground contact part 52e. The greatest thickness in a state in which this ground contact part 52e is making ground contact with the road surface R is set to at least 1 mm. In other words, this ground contact part 52e includes a portion having a thickness of at least 1 mm.

The aforementioned bead filler 22, rim strip rubber 32, sidewall rubber 40, reinforcement rubber layer 41, cap rubber 51 and high modulus rubber 52 of tread rubber 50 preferably use rubber having the following such modulus. It should be noted that the modulus in the present embodiment refers to the measured value of the modulus (M300 (MPa)) during 300% elongation while conducting tensile testing using a test piece of dumbbell shape 3 in accordance with JIS K 6251.

In other words, the modulus of the bead filler 22 preferably has a range of at least 6.0 to no more than 15.0, and the modulus of the rim strip rubber 32 preferably has a range of at least 2.5 to no more than 4.5. In addition, the modulus of the sidewall rubber 40 preferably has a range of at least 5.0 to no more than 6.5, and the reinforcement rubber layer 41 preferably has a range of at least 8.0 to no more than 9.5. In addition, the modulus of the cap rubber 51 of the tread rubber 50 preferably has a range of at least 7.5 to no more than 14.0, and the modulus of the high modulus rubber 52 is preferably on the order of 14.5.

In addition, in the comparison of the modulus, for the cap rubber 51 and the high modulus rubber 52 constituting the tread rubber 50, the high modulus rubber 52 preferably has a higher modulus than the cap rubber 51. In addition, the high modulus rubber 52 preferably has a higher modulus than the reinforcement rubber layer 41 of the sidewall 12. Furthermore, in the comparison with the sidewall rubber 40 of the sidewall 12, all of the cap rubber 51, high modulus rubber 52 and reinforcement rubber layer 41 preferably has a higher modulus than the sidewall rubber 40.

By using each rubber member having such a modulus, it is possible to keep a balance of flexibility as a tire and rigidity in the vicinity of the bead 11, and secure run-flat durability.

According to the tire 1 according to the aforementioned first embodiment, the following effects are exerted.

(1) The tire 1 according to the first embodiment is capable of run-flat travel while zero internal pressure, the tire including: the pair of bead 11; the pair of sidewalls 12 which extend from each of the pair of beads 11 to the tire-radial direction outer side; the tread 13 arranged between the pair of sidewalls 12; and the carcass ply 23 bridging between the pair of beads 11, in which the sidewall 12 has the sidewall rubber 40 arranged at the tire-width direction outer side of the carcass ply 23, and the reinforcement rubber layer 41 arranged at the tire inner cavity side of the carcass ply 23; the tread 13 has tread rubber 50 including the cap rubber 51 arranged at the tire-radial direction outer side of the crown part of the carcass ply 23, and the high modulus rubber 52 arranged at the tire-width direction outer side of the cap rubber 51 and having higher modulus than the cap rubber 51; and the tire-radial direction inside end 52c of the high modulus rubber 52 during normal internal pressure is positioned more to the tire-radial direction inner side than the tire-radial direction outside end 41a of the reinforcement rubber layer 41.

In other words, in the tire-width direction view, the high modulus rubber 52 and reinforcement rubber layer 41 have a portion overlapping with each other. In the case of the tire 1 becoming zero internal pressure such as shown in FIG. 3, and making run-flat travel, the reinforcement rubber layer 41 is superimposed above the high modulus rubber 52 making ground contact with the road surface R. Since this high modulus rubber 52 and reinforcement rubber layer 41 have high modulus, the force against the load during run-flat travel is strong, a result of which it is possible to improve the run-flat durability. In addition, since the high modulus rubber 52 having high wear resistance achieves a state making contact with the road surface R, wear of each rubber member constituting the tire 1 is suppressed, and it is possible to improve the run-flat durability from this point as well.

(2) In the tire 1 according to the first embodiment, the sidewall rubber 40 extends until the tire-width direction outer side region of the tread 13, the sidewall rubber 40 is laminated on the tire-width direction outer side of the high modulus rubber 52 in the tire-width direction outer side region of the tread 13.

Since the flexible sidewall rubber 40 extends until the tire-width direction outer side region of the tread 13, it is thereby possible to improve the durability of the tire during normal travel and during run-flat travel, while ensuring ride quality.

(3) In the tire 1 according to the first embodiment, the high modulus rubber 52 is arranged to contact at the tire-width direction inner side of the sidewall rubber 40.

Since the high modulus rubber 52 having high wear resistance is arranged adjacent to a tire-width direction inner side of the sidewall rubber 40, it is thereby possible to improve the run-flat durability.

(6) In the tire 1 according to the first embodiment, the tire-radial direction inside end 52c of the high modulus rubber 52 during normal internal pressure is positioned more to a tire-radial direction inner side than the tire-radial direction outside end 40a of the sidewall rubber 40.

In other words, in the tire-width direction view, the high modulus rubber 52 and sidewall rubber 40 have a portion overlapping each other. A transition region from the high modulus rubber 52 to the sidewall rubber 40 exists along the tire-radial direction, and it is thereby possible to suppress the occurrence of a portion steeply deforming when the tire is warped.

(7) In the tire 1 according to the first embodiment, the high modulus rubber 52 contacts the road surface R during zero internal pressure, while not contacting with the road surface R during normal internal pressure.

Since wear thereby does not occur in the high modulus rubber 52 during travel at normal internal pressure, and the high modulus rubber 52 makes ground contact only during run-flat travel, wasteful wear of the high modulus rubber 52 is suppressed, and it is possible to effectively elongate the lifespan of the high modulus rubber 52 during run-flat travel.

(8) In the tire 1 according to the first embodiment, the high modulus rubber 52 has a ground contact part 52 which contacts with the road surface R during zero internal pressure, and the thickness of this ground contact part 52e includes a portion of at least 1 mm.

During run-flat travel in a zero internal pressure state, durability enabling traveling a certain long distance (for example, at least several tens of 10 km) can thereby be expected.

(9) In the tire 1 according to the first embodiment, during normal internal pressure, the position of the tire-width direction inside end 52d of the high modulus rubber 52 is positioned more to the tire-width direction outer side than the position of the tire-radial direction outside end 41a of the reinforcement rubber layer 41.

Since the high modulus rubber 52 is thereby not arranged at the tire-width direction inner side of the reinforcement rubber layer 41, the rigidity of the tire-width direction inner side will not raise extremely more than the reinforcement rubber layer 41. As a result thereof, in the run-flat tire of a type enabling run-flat travel by a reinforcement rubber layer, it is possible maintain favorable ride quality during normal travel.

### (Second Embodiment)

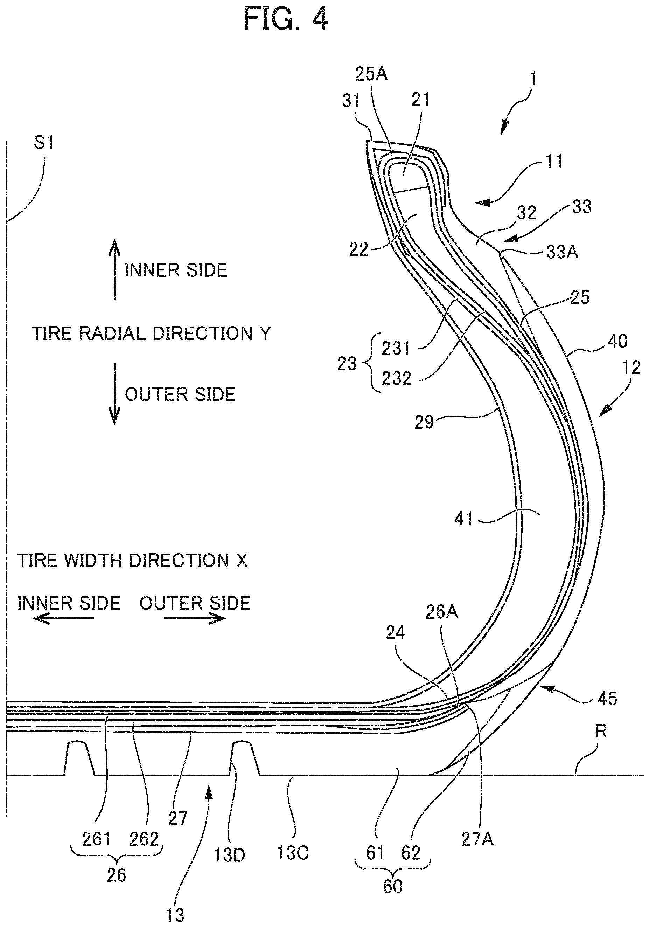

Next, a second embodiment of the present invention will be explained by referencing FIGS. 4 to 6. This second embodiment differs in the form of the tread rubber according to the present embodiment from the tread rubber 50 of the first embodiment, and other configurations are identical or similar. Therefore, in the following explanation, the same reference symbol is attached to constituent elements which are identical to the above first embodiment, and explanations thereof are omitted or abbreviated, and mainly the points of difference will be explained.

As shown in FIG. 4, the tread rubber 60 of the tire 1 according to the second embodiment includes cap rubber 61 serving as the main body of the tread 13, and high modulus rubber 62 arranged on the tire-width direction outer side of the cap rubber 61.

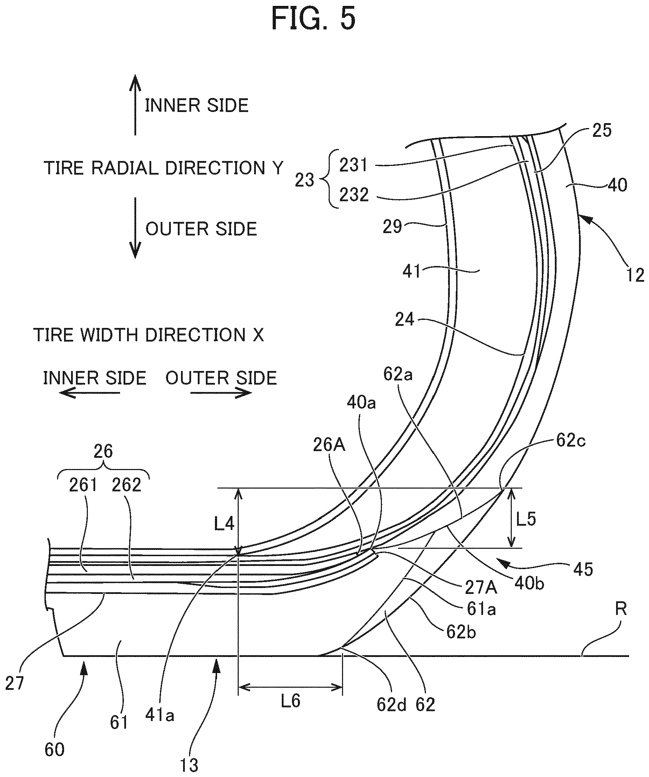

As shown in FIG. 5, the end part on the tire-radial direction outer side of the sidewall rubber 40 of the second embodiment curves so as to converge towards the tire-width direction outside end 27A of the cap ply 27, and becomes a tapered shape.

In the second embodiment, the tread rubber 60 constituting the tread 13 extends until a region on the tire-radial direction outer side of the sidewall 12. In more detail, the end part on the tire-width direction outer side of the cap rubber 61 extends more to the tire-width direction outer side and tire-radial direction inner side than the tire-width direction outside end 27A of the cap ply 27, and is laminated to contact a part of a surface 40b on the tire-width direction outer side of the sidewall rubber 40. The high modulus rubber 62 is provided to cover the end face 61a on the tire-width direction outer side of the cap rubber 61. The end face 61a thereof is formed in a curved surface roughly along the sidewall 12, and the high modulus rubber 62 curves along this end face 61a.

The end part 62a on the tire-radial direction inner side of the high modulus rubber 62 is laminated to contact a part of the surface 40b on the tire-width direction outer side of the sidewall rubber 40. In addition, the outer surface 62b on the tire-radial direction outer side of the high modulus rubber 62 is exposed, and constitutes a part of the tire outer surface. The high modulus rubber 62 extends so as to curve from the end part 62a on the tire-radial direction inner side contacting with the surface 40b on tire-width direction outer side of the sidewall rubber 40 towards the tire-width direction inner side, and the entire surface of this outer surface 62b is exposed so as to constitute the tire outer surface.

As shown in FIG. 5, while the tire 1 is normal internal pressure, the tire-radial direction inside end 62c of the high modulus rubber 62 is positioned more to the tire-radial direction inner side by a distance L4 than the tire-radial direction outside end 41a of the reinforcement rubber layer 41. In other words, in the tire-width direction view, the high modulus rubber 62 and reinforcement rubber layer 41 have a portion overlapping with each other. In addition, while the tire 1 is normal internal pressure, the tire-radial direction inside end 62c of the high modulus rubber 62 is positioned more to the tire-radial direction inner side by a distance L5 than the tire-radial direction outside end 40a of the sidewall rubber 40. In other words, in the tire-width direction view, the high modulus rubber 62 and sidewall rubber 40 have a portion overlapping with each other. Furthermore, while the tire 1 is normal internal pressure, the position of the tire-width direction inside end 62d of the high modulus rubber 62 is positioned more to the tire-width direction outer side by a distance L6 than the position of the tire-radial direction outside end 41a of the reinforcement rubber layer 41. the high modulus rubber 62 and the reinforcement rubber layer 41 have a portion overlapping with each other in the tire-radial direction view.

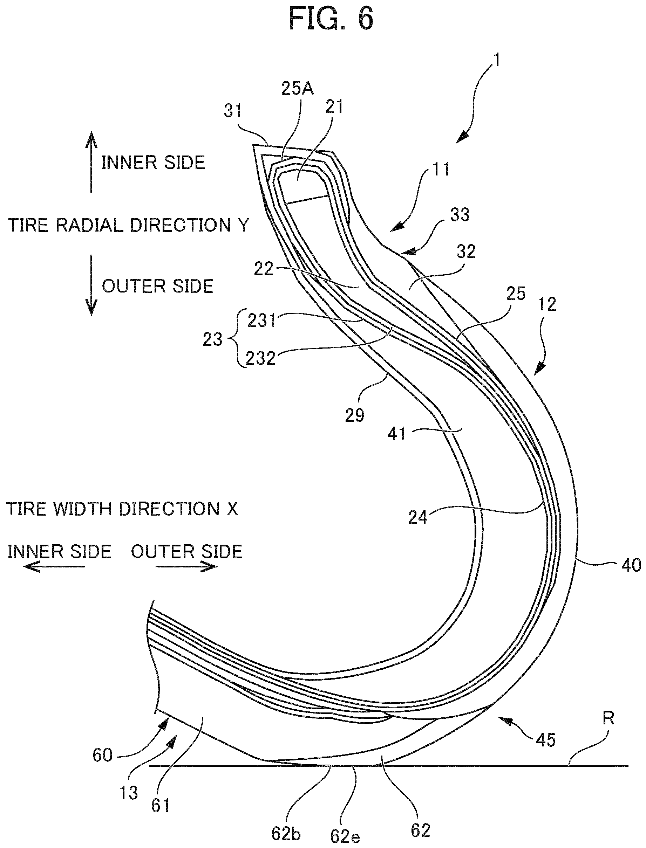

FIG. 6 shows a width-direction cross section of the tire 1 while zero internal pressure where the internal pressure is zero. During run-flat travel, the tire 1 deforms as in FIG. 6. The high modulus rubber 62 of the second embodiment does not contact with the road surface R while normal internal pressure, as shown in FIGS. 4 and 5. On the other hand, as shown in FIG. 6, the high modulus rubber 62 while zero internal pressure has a ground contact part 62e which contacts with the road surface R. In other words, the outer surface 62b of the high modulus rubber 62 includes the ground contact part 62e. The greatest thickness in a state in which this ground contact parts 62e is making ground contact with the road surface R is set to at least 1 mm. In other words, this ground contact part 62e includes a portion having a thickness of at least 1 mm.

The cap rubber 61 and high modulus rubber 62 of the second embodiment have modulus values similar to the cap rubber 51 and high modulus rubber 52 of the above first embodiment.

According to the tire 1 according to the aforementioned second embodiment, effects similar to (1) and (6) to (9) mentioned in the first embodiment are exerted. In other words, the tread rubber 60 including the cap rubber 61 and high modulus rubber 62 of the second embodiment corresponds to the tread rubber 50 including the cap rubber 51 and high modulus rubber 52 of the first embodiment. In addition, each of the tire-radial direction inside end 62c and tire-width direction inside end 62d of the high modulus rubber 62 of the second embodiment correspond to the tire-radial direction inside end 52c and tire-width direction inside end 52d of the high modulus rubber 52 of the first embodiment. Furthermore, the ground contact part 62e of the high modulus rubber 62 of the second embodiment corresponds to the ground contact part 52e of the first embodiment.

In addition, according to the tire 1 according to the second embodiment, the following effects are further exerted. (4) In the tire 1 according to the second embodiment, the tread rubber 60 extends until the tire-radial direction outer side region of the sidewall 12, and the high modulus rubber 62 is laminated on the tire-width direction outer side of the sidewall rubber 40 in the tire-radial direction outer side region of the sidewall 12.

It is thereby possible to increase the outer surface exposed region of the high modulus rubber 62 having high wear resistance, and thus possible to improve the run-flat durability.

(5) In the tire 1 according to the second embodiment, the high modulus rubber 62 is arranged to contact the tire-width direction outer side of the sidewall rubber 40.

Since the high modulus rubber 62 having high wear resistance is arranged adjacent to the tire-width direction outer side of the sidewall rubber 40, it is thereby possible to improve the run-flat durability.

The run-flat tire according to the present invention explained in the above embodiment can be adopted as a tire such as for cars, light trucks, trucks, buses, etc.; however, it is particularly suited as a tire for cars.

It should be noted that the present invention is not to be limited to the above-mentioned embodiments, and that even when carrying out modifications, improvements, etc. within a scope capable of achieving the object of the present invention, it is encompassed by the scope of the present invention. For example, while normal internal pressure, so long as the tire-radial direction inside end of the high modulus rubber is a mode positioned more to the tire-radial direction inner side than the tire-radial direction outside end of the reinforcement rubber layer, the shape and thickness of the high modulus rubber are not limited, and the arrangement relationships between this high modulus rubber, and the cap rubber, sidewall rubber, etc. at the circumference are arbitrary.

### EXPLANATION OF REFERENCE NUMERALS

1 tire (run-flat tire)
11 bead
12 sidewall
13 tread
23 carcass ply
40 sidewall rubber
40a tire-radial direction outside end of sidewall rubber
41 reinforcement rubber layer
41a tire-radial direction outside end of reinforcement rubber layer
50, 60 tread rubber
51, 61 cap rubber
52, 62 high modulus rubber
52c, 62c tire-radial direction inside end of high modulus rubber
52d, 62d tire-width direction inside end of high modulus rubber
52e, 62e ground contact part

## Claims

1. A run-flat tire (1) capable of run-flat travel while zero internal pressure, comprising:
a pair of beads (11);
a pair of sidewalls (12) which extend from each of the pair of beads (11) to an outer side in the tire-radial direction;
a tread (13) disposed between the pair of sidewalls (12); and
a carcass ply (23) bridged between the pair of beads (11),
wherein the sidewall (12) has sidewall rubber (40) disposed on a tire-width direction outer side of the carcass ply (23), and a reinforcement rubber layer (41) disposed on a tire inner cavity side of the carcass ply (23),
wherein the tread (13) has tread rubber (50) including cap rubber (51) disposed on a tire-radial direction outer side of the carcass ply (23), and high modulus rubber (52) disposed on a tire-width direction outer side of the cap rubber (51), and having a higher modulus than the cap rubber (51),
wherein the high modulus rubber (52) is disposed to contact with the sidewall rubber (40),
wherein a tire-radial direction inside end (52c) of the high modulus rubber (52) is positioned more to a tire-radial inner side than a tire-radial direction outside end (41a) of the reinforcement rubber layer (41), while normal internal pressure, and
wherein the modulus refers to the measured value of the modulus (M300 (MPa)) during 300% elongation while conducting tensile testing using a test piece of dumbbell shape 3 in accordance with JIS K 6251.

2. The run-flat tire (1) according to claim 1,
wherein the sidewall rubber (12) extends until a tire-width direction outer side region of the tread (13), and
wherein the sidewall rubber (40) is laminated on a tire-width direction outer side of the high modulus rubber (52) in a tire-width direction outer side region of the tread (13).

3. The run-flat tire (1) according to claim 2, wherein the high modulus rubber (52) is disposed to contact with a tire-width direction inner side of the sidewall rubber (40).

4. The run-flat tire (1) according to claim 1, wherein the tread rubber (50) extends until a tire-radial direction outer side region of the sidewall rubber (40), and
wherein the high modulus rubber (52) is laminated on a tire-width direction outer side of the sidewall rubber (40) in a tire-radial direction outer side region of the sidewall (12).

5. The run-flat tire (1) according to claim 4, wherein the high modulus rubber (52) is disposed to contact at a tire-width direction outer side of the sidewall rubber (40).

6. The run-flat tire (1) according to any one of claims 1 to 5, wherein the tire-radial direction inside end (52c) of the high modulus rubber (52) is positioned more to a tire-radial direction inner side than a tire-radial direction outside end (40a) of the sidewall rubber (40), while normal internal pressure.

7. The run-flat tire (1) according to any one of claims 1 to 6, wherein the high modulus rubber (52) does not make contact with a road surface while normal internal pressure, and contacts with a road surface while zero internal pressure.

8. The run-flat tire (1) according to any one of claims 1 to 7, wherein the high modulus rubber (52) has a ground contact part (52e) which contacts with a road surface while zero internal pressure, and a thickness of the ground contact part (52e) includes a portion of at least 1 mm.

9. The run-flat tire (1) according to any one of claims 1 to 8, wherein a position of a tire-width direction inside end (52d) of the high modulus rubber (52) is positioned more to a tire-width direction outer side than a position of the tire-radial direction outside end (41a) of the reinforcement rubber layer (41).

10. The run-flat tire (1) according to any one of claims 1 to 9, wherein the high modulus rubber (52) and the reinforcement rubber layer (41) have a portion overlapping with each other in the tire-width direction view.

11. The run-flat tire (1) according to any one of claims 1 to 10, wherein the high modulus rubber (52) and the reinforcement rubber layer (41) have a portion overlapping with each other in the tire-radial direction view.
